# EUROPEAN PATENT SPECIFICATION

(11) **EP 3 803 377 B1**
(45) Date of publication and mention of the grant of the patent: **15.11.2023**
(21) Application number: 19731060.0
(22) Date of filing: 28.05.2019
(51) Int. Cl.: G01N 30/20, G01N 30/24, G01N 30/88

(54) **ONLINE SAMPLE MANAGER**
ONLINE-PROBENMANAGER
GESTIONNAIRE D'ÉCHANTILLONS EN LIGNE

(30) Priority: 29.05.2018 US 201862677356 P
(43) Date of publication of application: 14.04.2021
(73) Proprietor: Waters Technologies Corporation, Milford, MA 01757 (US)
(72) Inventor: CORMIER, Sylvain Gilles, Mendon, Massachusetts 01756 (US); PHOEBE JR., Charles H., Uxbrige, Massachusetts 01569 (US)
(74) Representative: Forresters IP LLP
(86) International application number: PCT/US2019/034183
(87) International publication number: WO 2019/231918

(56) References cited:
- US-A1- 2008 229 809
- US-A1- 2012 216 632
- US-A1- 2016 195 564

## Description

### RELATED APPLICATIONS

This application claims the benefit of U.S. Provisional Application No. 62/677,356, filed on May 29, 2018, and titled "ONLINE SAMPLE MANAGER,".

### FIELD OF THE INVENTION

The invention relates generally to liquid chromatography systems. More specifically, the invention relates to systems for sampling directly from a process source. A method is also disclosed, but not independently claimed.

### BACKGROUND

Chromatography systems and methods may be applied to separate a mixture. In liquid chromatography, a sample containing a number of components to be separated may be injected into a system flow and directed through a chromatographic column. The column may separate the mixture by differential retention into its separate components. The components may elute from the column as distinct bands separated in time.

A typical liquid chromatography system may include a pump for delivering a fluid (the "mobile phase") at a controlled flow rate and composition, an injector to introduce a sample solution into the flowing mobile phase, a chromatographic column that contains a packing material or sorbent (the "stationary phase"), and a detector to detect the presence and amount of the sample components in the mobile phase leaving the column. Some liquid chromatography systems may require that a sample be diluted before the sample is injected into the mobile phase flowing to the chromatography column. When the mobile phase passes through the stationary phase, each component of the sample may emerge from the column at a different time because different components in the sample may have different affinities for the packing material. The presence of a particular component in the mobile phase exiting the column may be detected by measuring changes in a physical or chemical property of the eluent. By plotting the detector signal as a function of time, response "peaks" corresponding to the presence and quantities of the components of the sample may be observed.

Some industries, such as the biopharmaceutical industry, may use liquid chromatography systems to evaluate their reactions or their manufacturing process lines. For example, drug manufacturers may use a liquid chromatography system to monitor their process line by taking samples at various times or at different points along the process line to ensure that a manufacturing batch is being created to specification. Other manufacturers may use their liquid chromatography systems to profile a certain biochemical reaction, taking samples from the same point in the process line over time as the reaction progresses.

The manner of acquiring samples for analysis may be manually intensive. In some systems, an individual may take a sample manually from a process line, carry the sample to the liquid chromatography system, and load it for injection and analysis. Throughout the handling of the sample, care must be taken to label the sample properly and to ensure a well-documented chain of custody, or uncertainty may be introduced into the results. If the sample needs diluting before injection, the individual must first wash any container within which the dilution occurs to avoid contamination with previously used samples. Moreover, a manually prepared dilution can be wasteful of sample, which can oftentimes be an expensive commodity.

Additionally, errors may occur during the liquid chromatography process or analysis and a mixture representative of the sample may not be available at a later time. In some situations, preparing the sample for liquid chromatography and/or running the sample through the liquid chromatography process may take a disproportionate amount of time such that acquiring the sample to be analyzed from the process line at the proper time may not be practical.

US2012/216632 discloses a liquid sample analyzing apparatus and liquid sample introducing apparatus. US2016/195564 discloses an automated sample and reaction system for high pressure liquid chromatography and other types of detection.

### SUMMARY

The claimed invention provides an online sample manager as claimed.

In an aspect of the present disclosure, an online sample manager for a liquid chromatography system is described. The online sample manager includes a process valve. The process valve includes a sample drawing position permitting fluidic passage between a process line and a sample syringe. The process valve further includes a storage position permitting fluidic passage between the sample syringe and at least one of a sample storage vessel and a wash component.

The online sample manager includes an injection block in fluidic communication with the wash component. The online sample manager further includes a column valve permitting fluidic passage between the injection block and a column line port when the column valve is in a sample injection position. The fluidic passage permitted between the sample syringe and the sample storage vessel may be between the sample syringe and a storage injector for the sample storage vessel. The fluidic passage permitted between the sample syringe and the wash component may be between the sample syringe and a wash injector. The sample storage vessel may be a vial. The storage injector may be a vial injector. The fluidic passage permitted between the sample syringe and the sample storage vessel may be between the sample syringe and the vial injector.

In an implementation, the online sample manager may include a diluent syringe valve permitting fluidic passage between a diluent syringe and an injection block when the diluent syringe valve is in a diluent injection position. The online sample manager may further include a sample syringe valve permitting fluidic passage between the sample syringe and an injection block when the sample syringe valve is in a sample loop fill position. The column line port may be in fluidic communication with a chromatography column. The column valve may include a pump line port in fluidic communication with a pump configurable to facilitate transfer of an eluent from the injection block to a chromatography column.

Also disclosed, but not independently claimed as such, is a method for managing online sampling via an online sampling manager for a liquid chromatography system is described. The method may include drawing a first sample from a process line via a process valve in fluidic communication with a sample syringe, the process valve being in a sample drawing position. The method may further include filling a wash injector with the first sample from the sample syringe via a sample injection line, the process valve being in a sample injection position. The method may also include transferring the first sample from an injection block in fluidic communication with the wash injector to a waste line via a column valve. The method may additionally include drawing a second sample from the process line via the process valve in fluidic communication with the sample syringe, the process valve being in the sample drawing position. Moreover, the method may include filling a sample storage vessel with the second sample from the sample syringe via the sample injection line, the process valve being in the sample injection position.

One or more of the following features may be included. The method may include drawing a third sample from the process line via the process valve in fluidic communication with the sample syringe, the process valve being in the sample drawing position. The method may further include drawing diluent from a diluent line to a diluent syringe via a diluent syringe valve, the diluent syringe valve being in a diluent draw position. The method may also include filling a sample loop line with the third sample and the diluent via an injection block. The method may additionally include transferring the third sample and the diluent to a column line via the column valve.

In an implementation, the method may include transferring the third sample and the diluent from the column line to a chromatography column. The transferring may be facilitated by a pump in fluidic communication with the column line via the column valve. The method may further include drawing more diluent and a wash solution into the online sampling manager and performing a wash cycle on the online sampling manager.

Also disclosed, but not independently claimed, is an online sample manager for a liquid chromatography system is described. The online sample manager may include a process valve including a process line port through which sample is receivable when the process valve is in a sample drawing position and a storage line port through which stored sample is receivable when the process valve is in a storage position. The stored sample may be receivable from a sample storage vessel via a storage injector. The online sample manager may further include a column valve including a column line port through which sample is transferable to a chromatography column and a pump line port in fluidic communication with a pump. The online sample manager may also include a sample syringe valve including a sample line port through which sample is receivable from a sample syringe and transferable to the column valve. The online sample manager may additionally include a diluent syringe valve including a diluent line port through which diluent is receivable from a diluent syringe and transferable to an injection block. Moreover, the online sample manager may include a wash component configurable with a wash injector wherein a wash solution is receivable at the wash component from the sample line port.

### BRIEF DESCRIPTION OF THE DRAWINGS

The above and further advantages of this invention may be better understood by referring to the following description in conjunction with the accompanying drawings, in which like reference numerals indicate like elements and features in the various figures. For clarity, not every element may be labeled in every figure. The drawings are not necessarily to scale, emphasis instead being placed upon illustrating the principles of the invention.
FIG. 1 is a functional block diagram of an embodiment of a liquid chromatography system having an online sample manager.
FIG. 2 is flow diagram of an example online sample management process in accordance with the present disclosure.
FIG. 3 is a functional diagram of an embodiment of an online sample manager configured to acquire process sample from a process line.
FIG. 4 is a functional diagram of an embodiment of an online sample manager configured to fill an injector with sample from a process line.
FIG. 5 is also a functional diagram of an embodiment of an online sample manager configured to acquire process sample from a process line.
FIG. 6 is a functional diagram of an embodiment of an online sample manager configured to dispense process sample into a sample storage vessel.
FIG. 7 is a functional diagram of an embodiment of an online sample manager configured to acquire process sample from a process line and diluent from a diluent syringe.
FIG. 8 is a functional diagram of an embodiment of an online sample manager configured to fill a sample loop.
FIG. 9 is a functional diagram of an embodiment of an online sample manager configured to transfer sample to a column line.
FIG. 10 is a functional diagram of an embodiment of an online sample manager configured to draw diluent and a wash solvent.
FIG. 11 is a functional diagram of an embodiment of an online sample manager configured to perform a wash operation.

### DETAILED DESCRIPTION

Reference in the specification to "one embodiment" or "an embodiment" means that a particular, feature, structure or characteristic described in connection with the embodiment is included in at least one embodiment of the teaching. References to a particular embodiment within the specification do not necessarily all refer to the same embodiment.

The mobile phase may be a solvent used to dissolve a sample and carry the sample through the stationary phase of a liquid chromatography system. As used herein, the word "sample" refers to a sample solution that contains the sample components to be injected into the system flow of the liquid chromatography system. The sample solution may also include a sample diluent. The mobile phase may be a gradient mobile phase in which the composition of the mobile phase changes with time.

Online sample managers described herein may have particular application in process (manufacturing) environments for purposes of process evaluation and in research environments for purposes of monitoring and characterizing reactions. As used herein, "online" means that the sample manager is connected directly to a process (or production) line to acquire samples automatically from the process line in approximately real time without manual intervention, then dilute, load, and inject the acquired process samples for subsequent chromatographic analysis. The chromatographic analysis may thus occur in parallel to the continued operation of the process line. It is to be understood that no distinction is being made here between a production line and a process line, both terms being used herein interchangeably, both terms being specific examples of process sources from which online sample managers, such as those described herein, can directly and automatically collect process samples. Further, as used herein, the term "at-line" may refer to a situation where an individual places the process sample into the liquid chromatography system for processing.

Sample dilution at the location of injection according to the methods and systems described herein generally refers to dilution of the liquid from the sample source by the mobile phase of the chromatography system. If the sample source provides an undiluted sample, the mobile phase is the only diluent. In contrast, if the sample source provides the sample in a sample diluent, the mobile phase is a second diluent that is used to further dilute the raw sample.

The online systems described herein generally may not require a separate container within which to perform the dilution. Rather, the dilution may occur within the plumbing (i.e., tubing and other internal components) of the online sample manager by merging the acquired process sample with the diluent stream. Hence, no separate container need be washed to avoid contamination with a previously acquired and diluted sample.

One or more of the online sample managers described in the present disclosure may be capable of drawing samples from a process line or component therein (e.g., a reactor), injecting the samples into mobile phase, and/or storing the samples for future work or analysis. The online sample manager may allow for direct sampling from the process line, a portion of which may be stored in a storage vessel or vial for further analysis, and another portion of which may be injected into a liquid chromatography system or other flow analysis system. Using the techniques and features described in the present disclosure with respect to online sample managers, a user may pull a sample from a process line or component therein (e.g., a reactor) and decide on one or more sample analysis paths.

For example, the online sample managers described herein may allow the user to draw one or more samples and inject them into a liquid chromatography system for analysis. The online sample manager may allow the user to inject one or more at-line samples into the liquid chromatography system for analysis (e.g., from samples in vials). The online sample manager may allow the user to inject a standard substance into the liquid chromatography system which may be used as baselines for performing analysis on samples or calibration. The online sample manager may allow the user to draw a sample, store or retain a portion of the sample for future analysis, and inject another portion of the sample into the liquid chromatography system for a current analysis. In cases where the liquid chromatography analysis is time consuming, the user may set the online sample manager to sample at a set interval and store or retain the samples without performing injections into the liquid chromatography system until later.

An online sample manager for a liquid chromatography system is described in the present disclosure. The online sample manager may include a process valve. The process valve may include a sample drawing position permitting fluidic passage between a process line and a sample syringe. The process valve may further include a storage position permitting fluidic passage between the sample syringe and at least one of a sample storage vessel and a wash component.

The present disclosure will now be described in more detail with reference to embodiments thereof as shown in the accompanying drawings. While the present teaching is described in conjunction with various embodiments and examples, it is not intended that the present teaching be limited to such embodiments. On the contrary, the present disclosure encompasses various alternatives, modifications and equivalents, as will be appreciated by those of skill in the art. Those of ordinary skill having access to the teaching herein will recognize additional implementations, modifications and embodiments, as well as other fields of use, which are within the scope of the present disclosure as described herein.

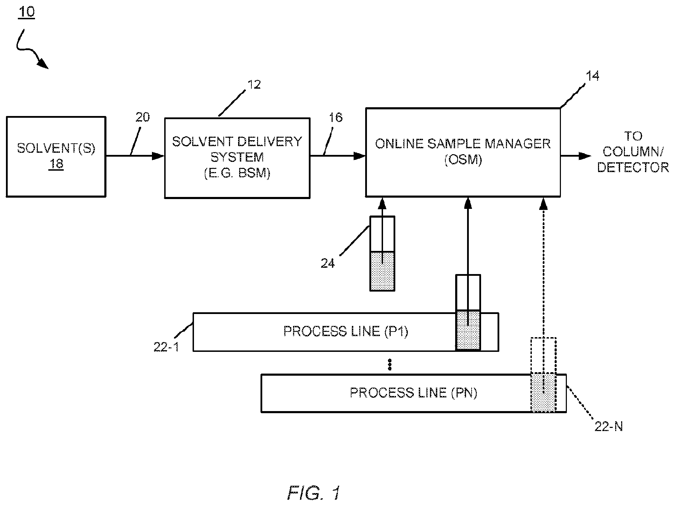

Referring now to FIG. 1, an example embodiment of a liquid chromatography system having an online sample manager is shown. The liquid chromatography system 10 may include a solvent delivery system 12 in fluidic communication with an online sample manager (OSM) 14 through tubing 16. Generally, the solvent delivery system 12 may include pumps (not shown) in fluidic communication with solvent reservoirs 18 from which the pumps draw solvents through tubing 20. In an embodiment, the solvent delivery system 12 may be a binary solvent manager (BSM), which may use two individual serial flow pumps to draw solvents from their reservoirs 18 and deliver a solvent composition to the OSM 14. An example implementation of a BSM is the ACQUITY UPLC Binary Solvent Manager, manufactured by Waters Corp. of Milford, MA.

The OSM 14 may be in fluidic communication with process lines 22-1, 22-N (generally, 22) to which the OSM is directly connected by tubing and from which the OSM may automatically acquire process samples. In general, a process line may be a representative example of a process source from which samples can be automatically acquired. Examples of process lines may include drug manufacturing processes, beaker reactions, exit lines (cleaning validation), reaction chambers, and fermentation reactions.

Although shown as acquiring process samples from multiple different process lines, the OSM 14 may acquire process samples from just one production line and may be connected thereto to acquire process samples at different stages (location and/or time-based) of that one process line. For example, the OSM may acquire samples from a process line at different time intervals in order to monitor the progress of a chemical reaction.

In addition, the OSM 14 may be in fluidic communication with a source of diluent 24, which may be used to dilute acquired process samples, and with a chromatographic column of particulate matter or with a detector (e.g., a mass spectrometer), for receiving an elution comprised of a diluted process sample combined with the solvent composition stream arriving from the solvent delivery system 12.

The liquid chromatography system 10 may further include a data system (not shown) that is in signal communication with the solvent delivery system 12 and the OSM 14. The data system may have a processor and a switch (e.g., an Ethernet switch) for handling signal communication between the solvent delivery system 12 and OSM 14. In addition, the data system may be programmed to implement the various phases of operation performed by the OSM (e.g., turning pumps on and off, rotating valves) in order to automatically acquire and dilute a process sample and introduce the diluted process sample to a solvent composition stream, as described herein. In addition, a host computing system (not shown) may be in communication with the data system, by which personnel can download various parameters and profiles to affect the data system's performance.

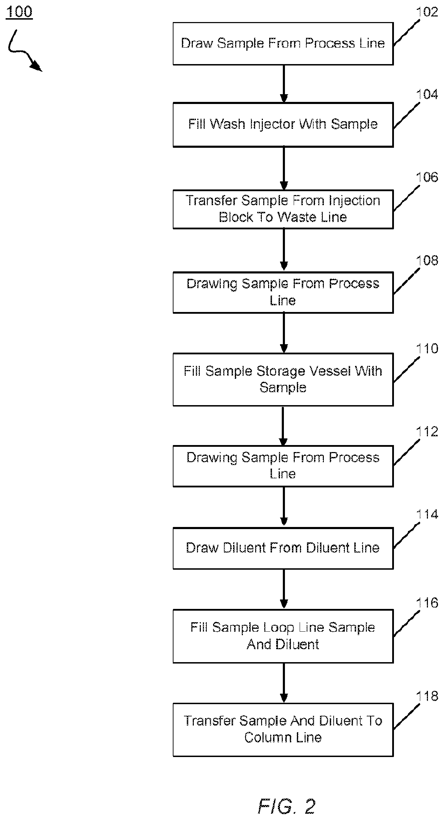

Referring now to FIG. 2, an example online sample management process in accordance with the present disclosure is shown. Online sample management process 100 may be executed using one or more of the online sample manager embodiments described here. It should be noted that online sample management process 100 is shown for illustrative purposes only and one or more of the operations of online sample management process 100 may not be performed and/or one or more of the operations of online sample management process 100 may be performed out of order while still falling within the scope of the present disclosure.

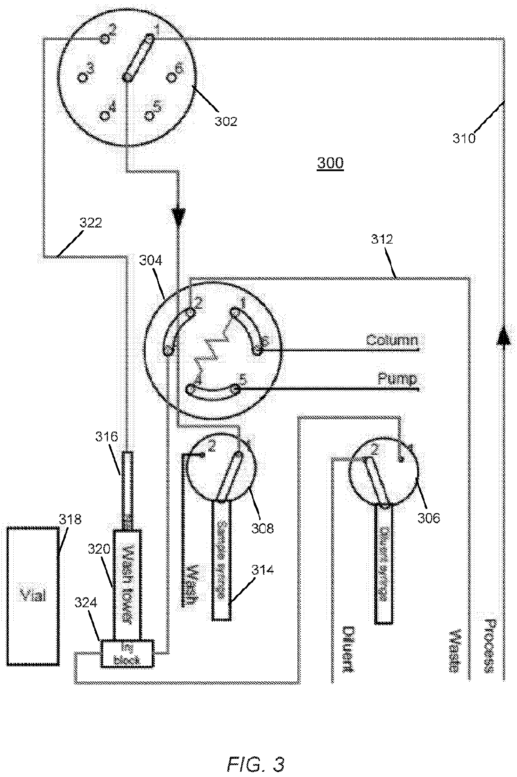

Referring now also to FIG. 3, an example online sample manager (OSM) in accordance with the present disclosure is shown. OSM 300 may include a process valve 302, a column valve 304, a diluent syringe valve 306, a sample syringe valve 308. Although described generally as rotary valves, any one or more of the process valve 302, the column valve 304, the diluent syringe valve 306, and the sample syringe valve 308 can be implemented using other types of valves, examples of which include, but are not limited to, slider valves, solenoids, and pin valves. In, for example, column valve 304, a flow-through conduit may provide a pathway between a pair of neighboring fluidic ports. When a given valve rotates, its flow-through conduits may move clockwise or counterclockwise, depending upon the valve's direction of rotation. This movement may operate to switch the flow-through conduit to a different pair of neighboring fluidic ports, establishing a fluidic pathway between that different pair while removing the pathway from the previously connected pair of fluidic ports.

The process valve 302 and the column valve 304 may each have six fluidic ports (numbered 1-6). The diluent syringe valve 306 and the sample syringe valve 308 may each have two fluidic ports (numbered 1-2). Tubing may connect one or more fluidic ports of one or more of the valves of OSM 300 with other components of OSM 300 or components outside of OSM 300 (e.g., pumps, injectors, syringes, various fluid lines, etc.). For example, process line 310 may include tubing which connects port 1 of process valve 302 to a component in a process (e.g., a reactor). Waste line 312 may include tubing which connects port 2 of column valve 304 with a waste container or system. One or more of the tubing connections described herein may be secured by various fasteners for creating tight connections and seals. Additionally, one or more pumps may be included inside (not shown) or outside OSM 300 to facilitate transfer of various fluids and materials involved in the process.

For example, to acquire a sample from process line 310, a pump (not shown) may be turned on, pulling the process sample from process line 310 and delivering the acquired process sample to port 1 of process valve 302. From port 1 of process valve 302, the process sample may move to port 1 of sample syringe valve 308. After sufficient process sample has been drawn, the pump may be turned off. With reference to FIG. 2 and FIG. 3, operation 102 of OSM process 100 may include drawing **(102)** a first sample from process line 310 via process valve 302. Process valve 302 may be in fluidic communication with a sample syringe 314 and may be in a sample drawing position (e.g., with port 1 in fluidic communication with sample syringe 314).

As discussed above, process valve 302 may include a sample drawing position (e.g., with port 1 in fluidic communication with sample syringe 314). The sample drawing position may permit fluidic passage between process line 310 and sample syringe 314. Process valve 302 may further include a storage position (e.g., with port 2 in fluidic communication with sample syringe 314 and wash injector 316). The storage position may permit fluidic passage between sample syringe 308 and at least one of a sample storage vessel 318 and a wash component 320.

Wash component 320 may be a wash tower. The wash tower may serve multiple purposes. For example, the wash tower may wash the outside of a needle which may be associated with wash injector 316. Further, the wash tower may capture an effluent of the needle when washing the inside of the needle. Additionally, the wash tower may connect (or create a fluidic path between) a tip of the needle and an injection block (e.g., injection block 324) by creating a face seal at the bottom of the wash tower with a tube. The tube may come from or be in fluidic communication with a diluent pump to create a diluted sample and send it to port 3 of the column valve (e.g., column valve 304) in order to fill the sample loop (e.g., between port 1 and port 4 of column valve 304) in preparation for an injection. One or more wash operations may be used after completion of a sample injection or before initiating a subsequent sample injection in order to reduce or eliminate cross-contamination that may occur between sample injections for consecutive separations.

Operation 104 of OSM process 100 may include filling **(104)** wash injector 316 with the first sample from sample syringe 314 via sample injection line 322. During operation 104, process valve 302 may be in a sample injection position (e.g., with port 2 in fluidic communication with sample syringe 314 and wash injector 316), which, in an implementation, may be the same as the storage position. In an embodiment, OSM 300 may include an injection block 324 in fluidic communication with wash component 320. In an implementation, the injection block may be a part of a wash station or separate from the wash station. For example, in an implementation, the injection block may be combined with the wash station and may include a tee that allows the needle (e.g., associated with wash injector 316) to connect with an outlet of the diluent pump to create the diluted sample and push the sample to the sample loop.

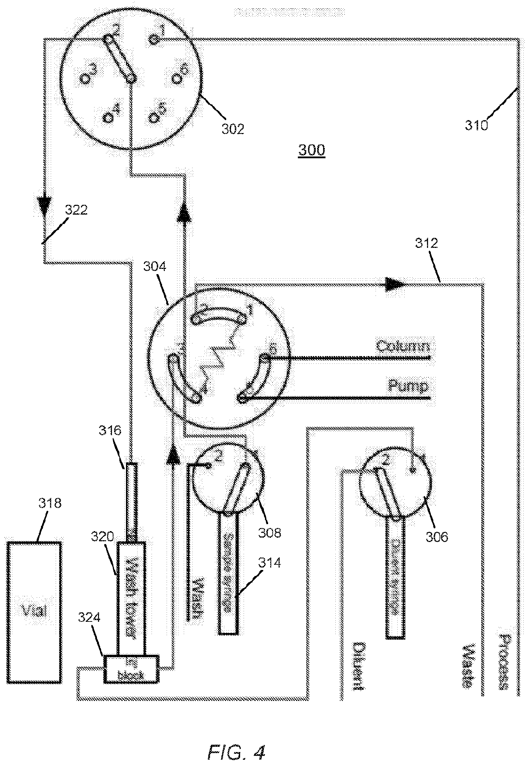

The fluidic passage permitted between sample syringe 314 and wash component 320 may also include fluidic passage between sample syringe 314 and wash injector 316. Referring now also to FIG. 4, operation 106 of OSM process 100 may include transferring **(106)** the first sample from injection block 324 in fluidic communication with wash injector 316 to waste line 312 via column valve 304. During operation 106, column valve 304 may be in a waste line position (e.g., with port 3 in fluidic communication with injection block 324 and port 2 in fluidic communication with waste line 312). In this position, a flow-through conduit may provide fluidic passage between ports 2 and 3 of column valve 304. Operation 106 may be performed in part to reduce or eliminate cross-contamination that may occur between sample injections for consecutive separations.

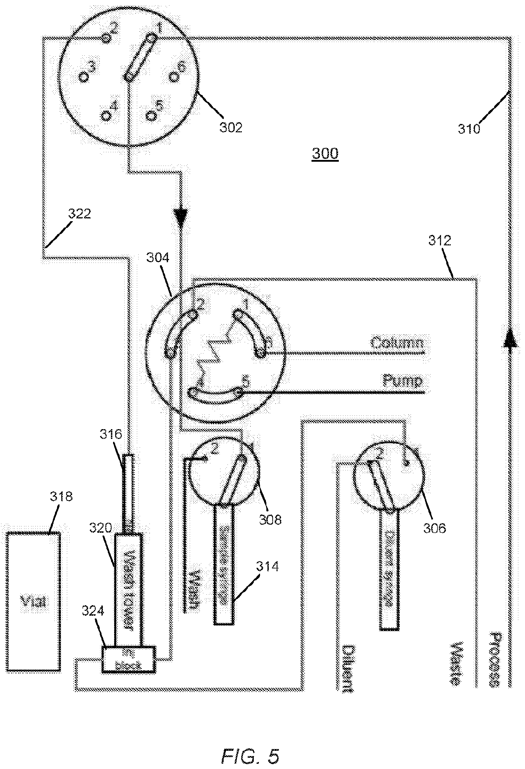

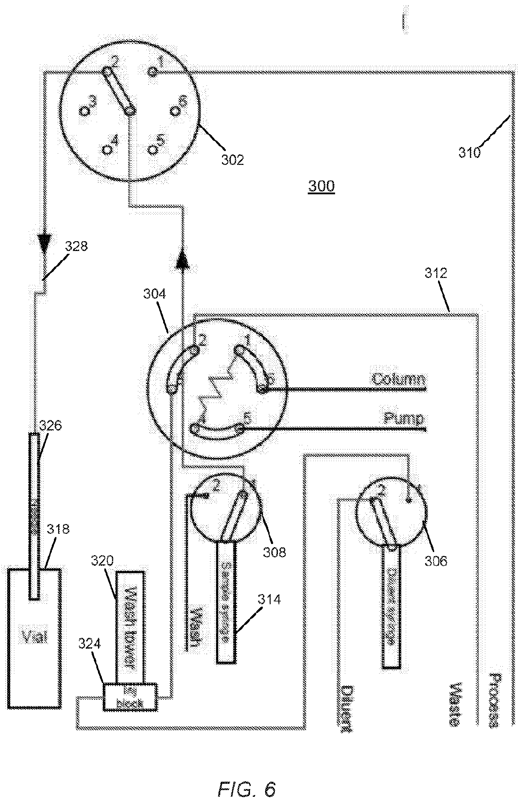

Referring now also to FIG. 5, in an embodiment, operation 108 of OSM process 100 may include drawing **(108)** a second sample from process line 310 via process valve 302 in fluidic communication with sample syringe 308. During operation 108, process valve 302 may be in the sample drawing position (e.g., with port 1 in fluidic communication with sample syringe 314). In this configuration, sample syringe 314 may fill with sample. Referring now also to FIG. 6, in an embodiment, operation 110 of OSM process 100 may include filling **(110)** sample storage vessel 318 with the second sample from sample syringe 314 via the sample injection line 328. During operation 110, process valve 302 may be in a sample injection position (e.g., with port 2 in fluidic communication with sample syringe 314 and sample storage injector 326).

It should be noted that, in an embodiment, sample injection lines 322 and 328 as shown in FIG. 5 and FIG. 6, respectively may be the same line (e.g., same tubing) and may be switched either manually or automatically during one or more operations involving OSM manager 300 from connecting port 2 of process valve 302 to wash component 320 and port 2 of process 302 to sample storage vessel 318. Further, it should be noted that, in an embodiment, wash injector 316 and sample storage injector 326 may be the same component and may be switched either manually or automatically during one or more operations involving OSM manager 300 from connecting sample line 322 to wash component 320 and sample line 328 to sample storage vessel 318. In other words, in an embodiment, the line running from port 2 of process valve 302 may be connected to an injector and that line and the injector may be moved either manually or automatically during one or more operations involving OSM manager 300 from connecting port 2 of process valve 302 to either wash component 320 or sample storage vessel 318.

The fluidic passage permitted between sample syringe 314 and sample storage vessel 318 may be between (e.g., may include) sample syringe 314 and storage injector 326 for sample storage vessel 318. In an implementation, sample storage vessel 318 may be a vial. Storage injector 326 may be a vial injector. The fluidic passage permitted between sample syringe 314 and sample storage vessel 318 may be between (e.g., may include) sample syringe 314 and the vial injector.

In this way, OSM 300 may allow a user to draw sample from the process line and draw sample from storage (e.g., from the vile). For example, the sample stored in the vile may be used later as a calibration source. Based on what is determined by a detector in the liquid chromatography system, a concentration of a later sample can be determined based on the sample stored in the vial. By allowing a user to save some sample in the vial, OSM 300 allows the user the flexibility to use that sample at a later time. Additionally, OSM 300 may allow a user to draw sample at either the same time or different times and store the sample in multiple vials which may be used as desired for different purposes at a later time.

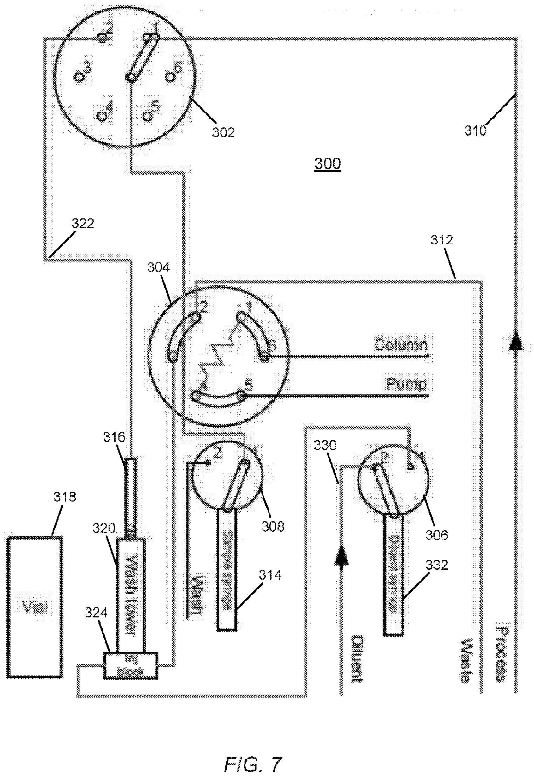

Referring now also to FIG. 7, in an embodiment, operation 112 of OSM process 100 may include drawing **(112)** a third sample from process line 310 via process valve 302 in fluidic communication with sample syringe 308. During operation 112, process valve 302 may be in a sample drawing position (e.g., with port 1 in fluidic communication with sample syringe 314). Further, operation 114 of OSM process 100 may include drawing **(114)** diluent from a diluent line 330 to a diluent syringe 332 via diluent syringe valve 306. During operation 114, diluent syringe valve 306 may be in a diluent draw position (e.g., with port 2 of diluent syringe valve 306 in fluidic communication with diluent line 330. Diluent line 330 may be in fluidic communication with a reservoir (not shown) which may include a diluting solution.

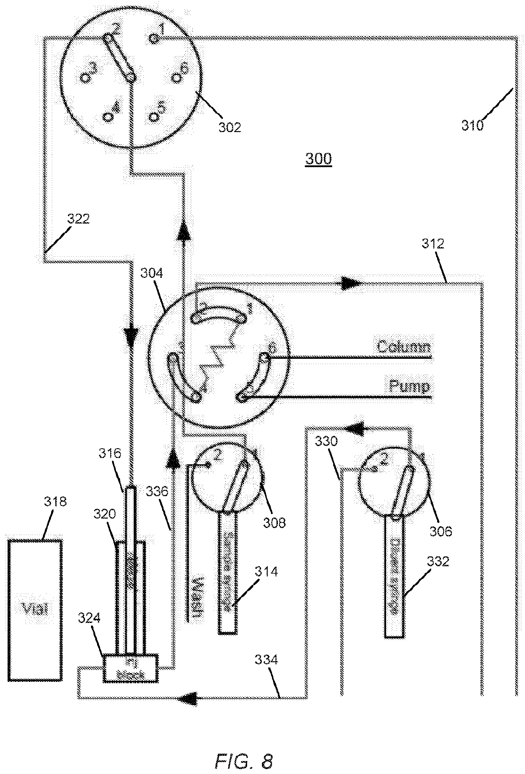

Referring now to FIG. 8, in an implementation, diluent syringe valve 306 may permit fluidic passage between diluent syringe 332 and injection block 324 via diluent injection line 334 when diluent syringe valve 306 is in a diluent injection position (e.g., with port 1 in fluidic communication with diluent syringe 332 and injection block 324). OSM 300 may further include sample syringe valve 308 which may permit fluidic passage between sample syringe 314 and injection block 324 when sample syringe valve 308 is in a sample loop fill position (e.g., port 1 of sample syringe valve 308 is in fluidic communication with sample line 322 via process valve 302). In an embodiment, operation 116 of OSM process 100 may include filling **(116)** a sample loop filling line 336 with the third sample and the diluent via injection block 324. A sample loop (e.g., between port 1 and port 4 on column valve 304) may be filled by activating both the sample syringe and the diluent syringe at applicable flow rates to produce a desired Dilution Factor. For example, a Sample Flow Rate may equal a Sample Load Loop Rate divided by the Dilution Factor and a Diluent Flow Rate may equal a Sample Load Loop Rate minus a Sample Flow Rate.

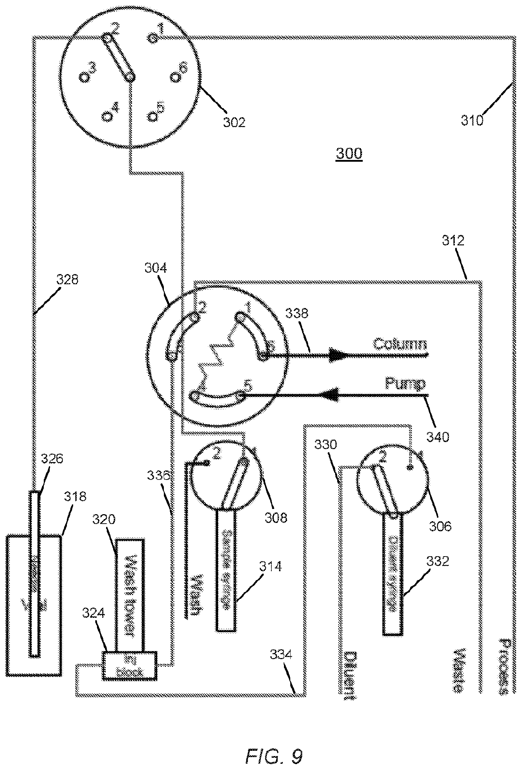

Referring to FIG. 9, column valve 304 of OSM 300 may permit fluidic passage between injection block 324 and a column line port (e.g., port 6 of column valve 304) when column valve 304 is in a sample injection position (e.g., as shown in FIG. 9). In an embodiment, operation 118 of OSM process 100 may include transferring **(118)** the third sample and the diluent to a column line 338 via column valve 304. For example, the sample loop (e.g., between port 1 and port 4 on column valve 304) may be filled as described in FIG. 8 above. A rotor of column valve 304 may rotate by 60 degrees to connect a pump outlet (e.g., via pump line 340) to a sample loop inlet (e.g., column valve 304 port 5 to port 4) and a sample loop outlet to the column inlet (e.g., via column valve 304 port 1 to port 6 and column line 338).

In an implementation, the column line port of column valve 304 may be in fluidic communication with a chromatography column (not shown). The column valve 304 may include a pump line port (e.g., port 5) in fluidic communication with a pump (not shown) via pump line 340. As described above, the pump may be configurable to facilitate transfer of an elution from injection block 324 to the chromatography column. In an implementation, operation 118 of OSM process 100 may include transferring **(118)** the third sample and the diluent from the column line 338 to a chromatography column (not shown). The transferring may be facilitated by a pump in fluidic communication with the column line 338 via the column valve 304.

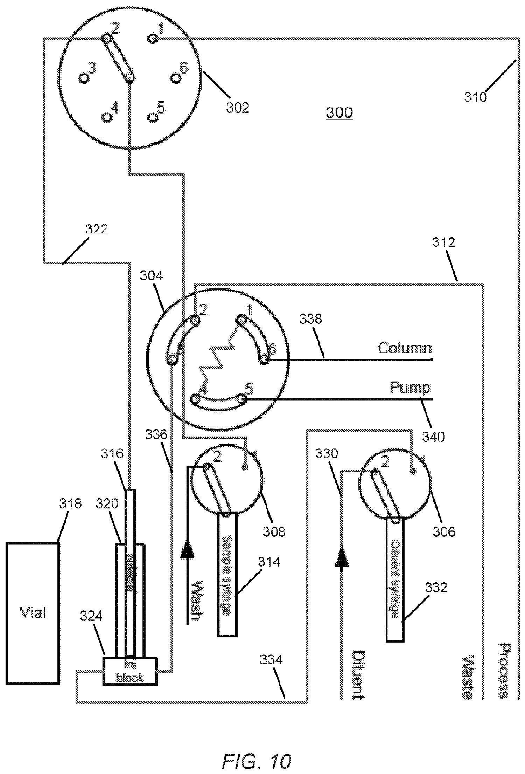

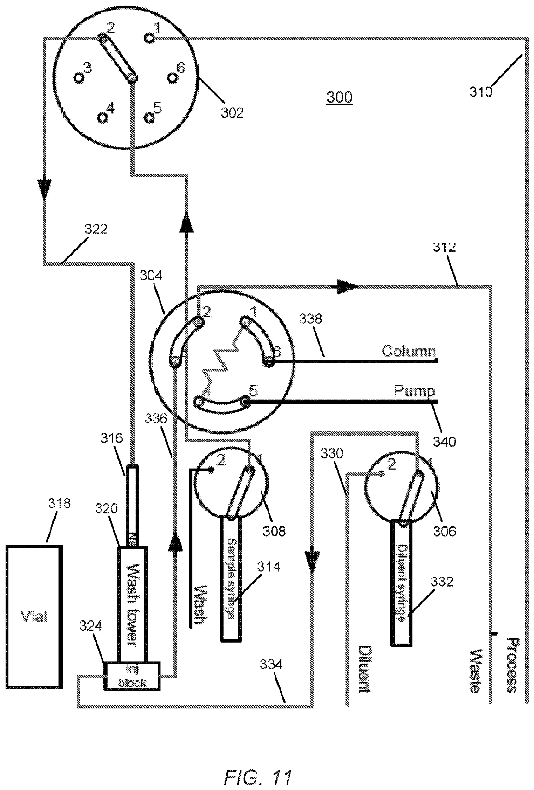

Referring now also to FIGS. 10-11, OSM process 100 may further include drawing more diluent and a wash solution into OSM 300 and performing a wash cycle on OSM 300. These may be cleaning operations and may prevent samples and/or diluents from contaminating fluidic components in the system. These operations may not be necessary to perform an injection and/or dilution but may be necessary to minimize carryover, which may be contamination of an injection by a previous injection. For example, FIG. 10 describes filling sample syringe 314 with wash solution (e.g., via port 2 of sample syringe valve 308) and diluent syringe 332 with diluent solution (e.g., via port 2 of diluent syringe valve 306). Further, FIG. 11 describes how fluidic components in the system may be cleaned by pushing wash solution and diluent solution through needles (e.g., a needle associated with sample syringe 314 to port 1 of sample syringe valve 308 and a needle associated with diluent syringe 332 to port 1 of diluent syringe valve 306), wash tower 320 and injection block 324, sample loop filling line 336 and column valve 304.

Using the techniques and features described in the present disclosure with reference to various embodiments of OSM process 100 and OSM 300, a user can be provided with greater flexibility in acquiring and storing sample. The user may now acquire sample, load sample loops simultaneously, and/or inject a middle loop or other loop. The user may be empowered to use different loop sizes for dilutions or perform dilutions on the fly.

For example, a user may pull sample from a process and make an injection into a liquid chromatograph system, but the user may not want to make injections routinely. Rather, the user may want to collect and store samples on a routine basis without making injections into the liquid chromatography system, but may wish to make injections of those samples later. The user may desire to know if there was a difference between injections, and now is enabled to have a stored sample to make this determination. For example, the user may not wish to make an injection into a liquid chromatography system every 5 minutes because this may produce too much data. The user may wish to make an injection on the hour and take a sample every 5 minutes. Using the techniques and features described herein, the user is enabled to have such flexibility with one sample manager system. For example, the user is enabled, via a single sample manager system, to have at least three options: (i) draw sample and inject it into the liquid chromatography system; (ii) draw sample, retain/store the sample in a vile, and then inject the sample at a later time; and/or (iii) just draw the sample and retain it without injection.

In some situations, separation via a liquid chromatography system can take 1.5 hours or longer. The user may wish to have information about a substance in a manufacturing process at a more granular timeframe than every 1.5 hours. Using the techniques and features described herein, a single sample manager can be used to take samples every 30 minutes. The user can now make an injection into the liquid chromatography system and 30 minutes later take a sample without injecting and store it in a vial. The user can take and store a sample every 30 minutes and inject when desired, all via one process line connected from the process to the single sample manager.
**WHILE THE INVENTION HAS BEEN SHOWN AND DESCRIBED WITH REFERENCE TO SPECIFIC EMBODIMENTS, IT SHOULD BE UNDERSTOOD BY THOSE SKILLED IN THE ART THAT VARIOUS CHANGES IN FORM AND DETAIL MAY BE MADE THEREIN WITHOUT DEPARTING FROM THE SCOPE OF THE INVENTION AS RECITED IN THE ACCOMPANYING CLAIMS.**

## Claims

1. An online sample manager (14) for a liquid chromatography system (10), comprising:
a process valve (302) comprising:
a first fluidic port (1) for communication with a process line (310);
a second fluidic port (2) for communication with at least one of a sample storage vessel (318) and a wash component (316);
a third fluidic port (1, 2) for communication with a sample syringe (308, 314);
a sample drawing position (1) permitting fluidic passage between the process line (310) and the sample syringe (308, 314); and
a storage position (2) permitting fluidic passage between the sample syringe (308, 314) and at least one of a sample storage vessel (318) and a wash component (320), the online sample manager (14) further comprising:
an injection block (324) in fluidic communication with the wash component (320); and
a column valve (304) permitting fluidic passage between the injection block (324) and a column line port (338)

2. The online sample manager (14) of claim 1, wherein the fluidic passage permitted between the sample syringe (308, 314) and the sample storage vessel (318) is between the sample syringe (308, 314) and a storage injector (326) for the sample storage vessel (318).

3. The online sample manager (14) of claim 1, wherein the fluidic passage permitted between the sample syringe (308, 314) and the wash component (320) is between the sample syringe (308, 314) and a wash injector (316).

4. The online sample manager (14) of claim 1, wherein the sample storage vessel (318) is a vial, the storage injector (326) is a vial injector, and the fluidic passage permitted between the sample syringe (308, 314) and the sample storage vessel is between the sample syringe (308, 314) and the vial injector.

5. The online sample manager (14) of claim 1, further comprising:
a diluent syringe valve (306) permitting fluidic passage between a diluent syringe (332) and the injection block (324) when the diluent syringe valve (306) is in a diluent injection position.

6. The online sample manager (14) of claim 1, further comprising:
a sample syringe valve (308) permitting fluidic passage between the sample syringe (308, 314) and the injection block (324) when the sample syringe valve (308) is in a sample loop fill position.

7. The online sample manager (14) of claim 1, wherein the column line port (338) is in fluidic communication with a chromatography column.

8. The online sample manager (14) of claim 1, wherein the column valve (304) comprises a pump line port in fluidic communication with a pump configurable to facilitate transfer of an elution from the injection block (324) to a chromatography column.

## Patentansprüche

1. Online-Probenmanager (14) für ein Flüssigkeitschromatografiesystem (10), umfassend:
Ein Prozessventil (302), umfassend:
Einen ersten Flüssigkeitsanschluss (1) zur Kommunikation mit einer Prozessleitung (310);
einen zweiten Flüssigkeitsanschluss (2) zur Kommunikation mit wenigstens dem Probenspeicherbehälter (318) bzw. einer Waschkomponente (316);
einen dritten Flüssigkeitsanschluss (1, 2) zur Kommunikation mit einer Probenspritze (308, 314);
eine Probenentnahmeposition (1), die Flüssigkeitsdurchgang zwischen der Prozessleitung (310) und der Probenspritze (308, 314) zulässt; und
eine Speicherposition (2), die Flüssigkeitsdurchgang zwischen der Probenspritze (308, 314) und wenigstens einem Probenspeicherbehälter (318) bzw. einer Waschkomponente (320) zulässt, wobei der Online-Probenmanager (14) ferner umfasst: einen Einspritzblock (324) in Flüssigkeitskommunikation mit der Waschkomponente (320); und
ein Säulenventil (304), welches den Flüssigkeitsdurchgang zwischen dem Einspritzblock (324) und einen Säulenleitungsanschluss (338) zulässt.

2. Online-Probenmanager (14) nach Anspruch 1, wobei der Flüssigkeitsdurchgang, der zwischen der Probenspritze (308, 314) und dem Probenspeicherbehälter (318) zulässig ist, zwischen der Probenspritze (308, 314) und einem Speicherinjektor (326) für den Probenspeicherbehälter (318) ist.

3. Online-Probenmanager (14) nach Anspruch 1, wobei der Flüssigkeitsdurchgang, der zwischen der Probenspritze (308, 314) und der Waschkomponente (320) zulässig ist, zwischen der Probenspritze (308, 314) und einem Waschinjektor (326) ist.

4. Online-Probenmanager (14) nach Anspruch 1, wobei der Probenspeicherbehälter (318) ein Fläschchen ist, der Speicherinjektor (326) ein Fläschcheninjektor ist, und der zwischen der Probenspritze (308, 314) und dem Probenspeicherbehälter zulässige Flüssigkeitsdurchgang zwischen der Probenspritze (308, 314) und dem Fläschcheninjektor ist.

5. Online-Probenmanager (14) nach Anspruch 1, ferner umfassend:
Ein Ventil (306) für die Verdünnungsmittelspritze, welches den Flüssigkeitsdurchgang zwischen einer Verdünnungsmittelspritze (332) und dem Einspritzblock (324) zulässt, wenn sich das Ventil (306) für die Verdünnungsmittelspritze in einer Position zur Einspritzung des Verdünnungsmittels befindet.

6. Online-Probenmanager (14) nach Anspruch 1, ferner umfassend:
Ein Ventil (308) für die Probenspritze, welches den Flüssigkeitsdurchgang zwischen der Probenspritze (308, 314) und dem Einspritzblock (324) zulässt, wenn sich das Ventil (308) für die Probenspritze in einer Füllposition für die Probenschleife befindet.

7. Online-Probenmanager (14) nach Anspruch 1, wobei der Säulenleitungsanschluss (338) in Flüssigkeitskommunikation mit einer Chromatografiesäule ist.

8. Online-Probenmanager (14) nach Anspruch 1, wobei das Säulenventil (304) einen Pumpenleitungsanschluss in Flüssigkeitskommunikation mit einer Pumpe umfasst, die konfigurierbar ist, um Transfer einer Elution vom Einspritzblock (324) zu einer Chromatografiesäule zu erleichtern.

## Revendications

1. Un gestionnaire d'échantillons automatisé (14) pour un système de chromatographie en phase liquide (10), comprenant :
une vanne de traitement (302) comprenant :
un premier port fluidique (1) qui communique avec une ligne de traitement (310) ;
un deuxième port fluidique (2) qui communique avec au moins un récipient de stockage d'échantillons (318) et un composant de lavage (316) ;
un troisième port fluidique (1,2) qui communique avec une seringue de prélèvement d'échantillon (308, 314) ;
une position de prélèvement d'échantillon (1) permettant un passage fluidique entre la ligne de traitement (310) et la seringue de prélèvement d'échantillon (308, 314) ; et
une position de stockage (2) permettant un passage fluidique entre la seringue de prélèvement d'échantillon (308, 314) et au moins un récipient de stockage d'échantillons (318) et un composant de lavage (320), le gestionnaire d'échantillon automatisé (14) comprenant en outre :
un bloc d'injection (324) en communication fluidique avec le composant de lavage (320) ; et
une vanne de colonne (304) permettant un passage fluidique entre le bloc d'injection (324) et un port de la ligne de colonne (338).

2. Gestionnaire d'échantillons automatisé (14) selon la revendication 1, dans lequel le passage fluidique permis entre la seringue de prélèvement d'échantillon (308, 314) et le récipient de stockage d'échantillons (318) se trouve entre la seringue de prélèvement d'échantillon (308, 314) et un injecteur de stockage (326) pour le récipient de stockage d'échantillons (318).

3. Gestionnaire d'échantillon automatisé (14) selon la revendication 1, dans lequel le passage fluidique permis entre la seringue de prélèvement d'échantillons (308, 314) et le composant de lavage (320) se trouve entre la seringue de prélèvement d'échantillons (308, 314) et un injecteur de lavage (316).

4. Gestionnaire d'échantillon automatisé (14) selon la revendication 1, dans lequel le récipient de stockage d'échantillons (318) est un flacon, l'injecteur de stockage (326) est un injecteur de flacon, et le passage fluidique permis entre la seringue de prélèvement d'échantillon (308, 314) et le récipient de stockage d'échantillons se trouve entre la seringue de prélèvement d'échantillon (308, 314) et l'injecteur de flacon.

5. Gestionnaire d'échantillons automatisé (14) selon la revendication 1, comprenant en outre :
une vanne de seringue de diluant (306) permettant un passage fluidique entre une seringue de diluant (332) et le bloc d'injection (324) lorsque la vanne de seringue de diluant (306) est dans une position d'injection de diluant.

6. Gestionnaire d'échantillons automatisé (14) selon la revendication 1, comprenant en outre :
une vanne de seringue de prélèvement d'échantillon (308) permettant un passage fluidique entre la seringue de prélèvement d'échantillon (308, 314) et le bloc d'injection (324) lorsque la vanne de seringue de prélèvement d'échantillon (308) est dans une position de remplissage de boucle d'échantillonnage.

7. Gestionnaire d'échantillon automatisé (14) selon la revendication 1, dans lequel le port de ligne de colonne (338) est en communication fluidique avec une colonne de chromatographie.

8. Gestionnaire d'échantillon automatisé (14) selon la revendication 1, dans lequel la vanne de colonne (304) comprend un port de ligne de pompe en communication fluidique avec une pompe configurable afin de faciliter le transfert d'une élution depuis le bloc d'injection (324) jusqu'à une colonne de chromatographie.
